Europäisches Patentamt

European Patent Office

Office européen des brevets

(19)

(11) Publication number: **0 151 396**
**B1**

# EUROPEAN PATENT SPECIFICATION

(45) Date of publication of the patent specification:
29.10.86

(51) Int. Cl.⁴: **F 16 G 5/16**

(21) Application number: **85100231.1**

(22) Date of filing: **11.01.85**

(54) Driving belts for use on V-belt pulleys.

(30) Priority: **24.01.84 NL 8400213**

(43) Date of publication of application:
**14.08.85 Bulletin 85/33**

(45) Publication of the grant of the patent:
**29.10.86 Bulletin 86/44**

(84) Designated Contracting States:
**AT CH DE FR GB IT LI NL SE**

(56) References cited:
**WO - A - 84/04950**
**DE - A - 2 643 528**
**FR - A - 2 242 608**
**GB - A - 2 013 116**

(73) Proprietor: **Van Doorne's Transmissie B.V., Dr. Hub van Doorneweg 120 Postbus 500, NL-5026 RA Tilburg (NL)**

(72) Inventor: **Cadée, Theodorus Petrus Maria, Pastoor de Beeckstraat 11, NL-5051 TJ Goirle (NL)**
Inventor: **Hendriks, Emerie Frederik Marie, De Zadelmaker 4, NL-5591 NR Heeze (NL)**

(74) Representative: **Timmermans, Anthonius C.Th., Ir. et al, European Patent Attorneys Octrooibureau Zuid P.O. Box 2287, NL-5600 CG Eindhoven (NL)**

ACTORUM AG

## Description

The invention relates to a driving belt for use on V-belt pulleys, provided with an endless carrier consisting of two packages, each composed of a number of endless striplike bands mounted one round the other, also provided with a number of transverse elements mounted slidably on the carrier which have slots on both sides, each slot being intended for receiving a carrier package and being bounded by a contiguous surface resting against the inside of the package and a contiguous surface acting together with the outside of the package, the latter contiguous surface extending over less than three-quarters of the width of the package.

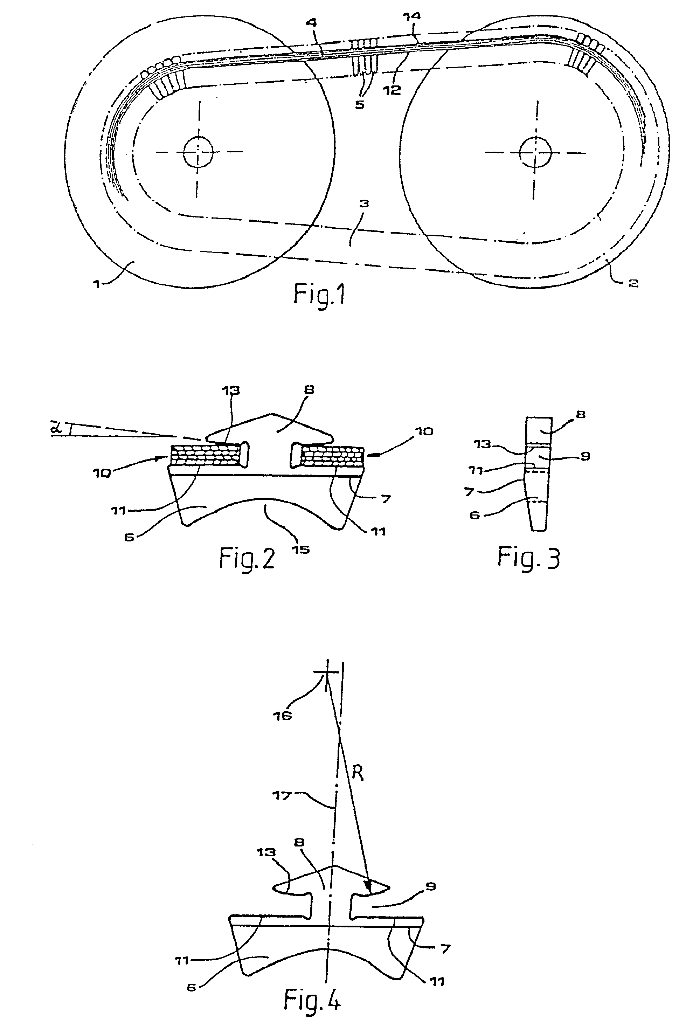

Such a driving belt is described in US-A-3 949 621 (FR-A-2242608), in which Fig. 5 shows a schematic cross-section of such a driving belt with relatively small contiguous surfaces acting together with the outsides of the packages. Fig. 1 of the same patent depicts a corresponding cross-section through a driving belt with contiguous surfaces extending over the entire width of the packages.

The concept of limiting the size of that part of the transverse element which is located above the packages fits in with the effort to make the transverse element lighter by reduction of the surface area. In principle, such a transverse element allows a higher speed of the driving belt and generally results in a better performance of the driving belt. In actual practice, however, it has been found that a driving belt as represented in Fig. 5 of the said United States patent fails to comply with the requirements, because the mutual interaction between the transverse element and the packages of the carrier proves to be inadequate, which may give rise to, for instance, premature wear.

An object of the present invention is to provide a driving belt in which the dimensions of that part of the transverse element which is located above the packages are limited, whilst an optimum interaction between the carrier and the transverse elements is ensured.

According to the invention, the contiguous surface intended to act together with the outside of the package is substantially inclined at such an angle to the lateral axis of the package that the slot in which the package is positioned substantially tapers slightly inwards.

Although it could be imagined that the use of a slightly tapering slot would constitute a disadvantage because of the package tending to run off the slot, actual practice has shown that this very arrangement has an advantageous effect on the operation of the driving belt.

According to a further feature of the invention, the angle under which the contiguous surface intended to operate jointly with the outside of the package is inclined to the lateral axis of the package, is on average substantially between 2° and 5°.

According to still another feature of the invention, the contiguous surface intended to operate jointly with the outside of the package may be convexly curved in the lateral sense relative to the driving belt. Such a convexity will preferably have a radius of curvature between 50 and 1000 mm.

If the contiguous surface intended to operate jointly with the outside of the package is not plane but curved, it is obviously a question of an average surface making an angle with the lateral axis of the package.

A convex curvature may have a centre, i.e. an imaginary point in the centre of a circle, part of whose circumference coincides with the curvature. Conceivably, however, the curvature may not exactly have the form of an arc, so that in fact there are several centres generally situated in an area that can, as a whole, be designated as the centre.

According to yet another feature of the invention, the centre of the curvature may lie on the other side of the plane of radial symmetry through the driving belt than the convexly curved contiguous surface intended to operate jointly with the outside of the package, as will be explained in more detail with reference to the drawing.

To elucidate the invention, two embodiments will now be described by way of example with reference to the accompanying drawings, in which

Fig. 1 is a simplified diagram of a driving belt looped round two pulleys;

Fig. 2 is a diagrammatic cross-section through a driving belt of the first example;

Fig. 3 is a side view of a transverse element of the first example; and

Fig. 4 depicts a transverse element of a driving belt of a second example.

Fig. 1 represents two pulleys 1, 2 and, by means of a dotdash line, the driving belt 3 looped round them. This driving belt 3 is provided with a carrier 4 and a number of transverse elements 5 which have been slidably mounted on the carrier 4 in an uninterrupted series and which may come into contact with the pulleys 1, 2.

Fig. 2 depicts a cross-section through the driving belt 3, that is, through the two belt packages, briefly called packages 10, which constitute the carrier 4 in a front view of transverse element 5. According to the figure, each package 10 consists of four endless bands mounted one round the other. In actual practice, the design may comprise more bands, for instance, ten endless metal bands fitted one round the other with a thickness of, say, 0,2 mm each.

The transverse element according to the example of Fig. 2, of which a side view is represented in Fig. 3, has a tapering section 6 which changes at the location of the tilting edge or contact area 7 into a section 8 whose main faces are parallel and which is located above the packages 10. The two packages 10 are positioned in slots 9, each of which is bounded by a contiguous surface 11 fitting the inside (indicated with reference numeral 12 in Fig. 1) of package 10 and a contiguous surface 13 operating jointly with the outside (indicated with reference numeral 14 in Fig. 1) of package 10.

As appears from Fig. 2, the bottom surface of the transverse element has a concavity 15 in order to make the transverse element lighter. With the same end in view the section 8 of the transverse element which is located above the packages 10 has been made of such limited size that it covers less than three quarters of the width of package 10.

As represented in Fig. 2, the contiguous surface 13 is disposed at an angle α to the lateral axis of the package. In general, the contiguous surface 13 will not be perfectly plane, but may exhibit a circular or non-circular curvature in both directions, in which case the average angle is equal to α.

According to a second embodiment, of which a transverse element is represented in Fig. 4, the contiguous surface 13 has a convex curvature in crosswise direction relative to the driving belt. This curvature is denoted by radius R, which does not otherwise need to be constant throughout the entire contiguous surface 13.

According to Fig. 4 the average curvature of the contiguous surface 13, which is denoted by radius of curvature R, has its centre at a position 16 situated on the other side of the plane of radial symmetry 17 of the said contiguous surface 13. As appears from Fig. 4, this arrangement results in a substantially tapering slot 9 which in actual practice has shown an excellent performance. Such a curvature of the contiguous surface 13 can be brought about during the punching of the transverse element or may, for instance, be ground in.

As a point of interest, it is to be observed that the reference numerals used in Fig. 4 are the same as those of Fig. 2.

## Claims

1. A driving belt for use on V-belt pulleys, provided with an endless carrier (4) consisting of two packages (10), each composed of a number of endless striplike bands mounted one round the other, also provided with a number of transverse elements (5) mounted slidably on the carrier (4) which have slots (9) on both sides, each slot being intended for receiving a carrier package (10) and being bounded by a contiguous surface (11) resting against the inside (12) of the package and a contiguous surface (13) acting together with the outside (14) of the package, the latter contiguous surface (13) extending over less than three quarters of the width of the package, characterized in that the contiguous surface (13) intended to act together with the outside (14) of the package (10) is substantially inclined at such an angle α to the lateral axis of the package that the slot (9) substantially tapers slightly inwards.

2. A driving belt according to claim 1, characterized in that the angle α, under which the contiguous surface (13) intended to act together with the outside (14) of the package (10) is inclined to the lateral axis of the package, is on average substantially between 2° and 5°.

3. A driving belt according to either one of claims 1 and 2, characterized in that the contiguous surface (13) intended to act together with the outside (14) of the package (10) is convexly curved in the lateral sense relative to the driving belt (3).

4. A driving belt according to claim 3, characterized in that the curvature of the contiguous surface (13) intended to act together with the outside (14) of the package (10) has a radius R between 50 and 1000 mm.

5. A driving belt according to claim 3, characterized in that the radius R of curvature is between 100 and 300 mm.

6. A driving belt according to any one of claims 3-5, characterized in that the centre of the curvature (16) lies on the other side of the plane of radial symmetry (17) through the driving belt than the convexly curved contiguous surface (13) intended to act together with the outside (14) of the package.

## Patentansprüche

1. Treibriemen für V-förmige Scheiben mit einem aus zwei Paketen (10) bestehenden endlosen Träger (4), wobei jedes Paket aus einer Anzahl endlosen, umeinander angeordneten flachen Bändern besteht und mit einer Anzahl von verschiebbar auf den Träger (4) angeordneten, an beiden Seiten mit Ausnehmungen (9) versehenen Querelementen (5), wobei jede Ausnehmung zur Aufnahme eines Trägerpaketes (10) bestimmt ist und einerseits durch eine auf die Innenseite (12) des Paketes ruhende Anliegefläche (11) und andererseits durch eine mit der Aussenseite (14) des Paketes zusammenwirkende Anliegefläche (13) begrenzt ist, welche letztgenannte Anliegefläche (13) sich über nicht mehr als drei Viertel der Breite des Paketes erstreckt, dadurch gekennzeichnet, dass die Anliegefläche (13), die mit der Aussenseite (14) des Paketes (10) zusammenwirken soll, einigermassen schräg verläuft und zwar unter einem solchen Winkel α zur Querachse des Paketes, dass die Ausnehmung (9) nach innen verlaufend praktisch konisch ist.

2. Treibriemen gemäss Anspruch 1, dadurch gekennzeichnet, dass der Winkel α zwischen der Anliegefläche (13), die mit der Aussenseite (14) des Paketes (10) zusammenwirken soll, gegenüber der Querachse des Paketes einen Wert hat, der im Mittel praktisch zwischen 2° und 5° liegt.

3. Treibriemen gemäss Anspruch 1 oder 2, dadurch gekennzeichnet, dass die Anliegefläche (13), die mit der Aussenseite (14) des Paketes (10) zusammenwirken soll, in Querrichtung zum Treibriemen (3) konvex gekrümmt ist.

4. Treibriemen gemäss Anspruch 3, dadurch gekennzeichnet, dass die Krümmung der Anliegefläche (13), die mit der Aussenseite (14) des Paketes (10) zusammenwirken soll, einen Radius R zwischen 50 und 1000 mm hat.

5. Treibriemen gemäss Anspruch 3, dadurch gekennzeichnet, dass der Krümmungsradius R zwischen 100 und 300 mm liegt.

6. Treibriemen gemäss Anspruch 3-5, dadurch gekennzeichnet, dass der Mittelpunkt der Krümmung (16) an der anderen Seite der Radialsymmetriefläche (17) durch den Treibriemen liegt als die konvex gekrümmte Anliegefläche (13), die mit der Aussenseite (14) des Paketes zusammenwirken soll.

## Revendications

1. Courroie d'entraînement pour poulies en forme de V, avec une bande de support sans fin (4) qui se compose de deux paquets (10), chaque paquet étant composé d'un certain nombre de rubans plats sans fin superposés et avec un certain nombre d'éléments (5) disposés transversalement et glissables sur la bande de support (4), les éléments (5) étant munis d'encoches (9) des deux côtés, chaque encoche étant destinée à recevoir un paquet (10) de la bande de support et ayant une surface d'appui (11) qui est en contact avec le côté intérieur (12) du paquet et une autre surface d'appui (13) pour la coopération avec le côté extérieur (14) du paquet, la surface d'appui (13) ayant une extension plus courte que trois quarts de la largeur du paquet, caractérisée en ce que la surface d'appui (13) destinée à la coopération avec le côté extérieur (14) du paquet (10) présente une certaine inclinaison formant un angle α relatif à l'axe latéral du paquet de sorte que l'encoche (9) converge légèrement vers l'intérieur.

2. Courroie selon la revendication 1, caractérisée en ce que l'angle d'inclinaison α de la surface d'appui (13) pour la coopération avec le côté extérieur (14) du paquet (10), relatif à l'axe latéral du paquet, est compris en moyenne entre 2° et 5°.

3. Courroie selon la revendication 1 ou 2, caractérisée en ce que la surface d'appui (13) pour la coopération avec le côté extérieur (14) du paquet (10) montre une courbure convexe relative à la direction latérale de la courroie (3).

4. Courroie selon la revendication 3, caractérisée en ce que la courbure de la surface d'appui (13) pour la coopération avec le côté extérieur (14) du paquet (10) a un radius R entre 50 et 1000 mm.

5. Courroie selon la revendication 3, caractérisée en ce que le radius R est de 100 à 300 mm.

6. Courroie selon les revendications 3-5, caractérisée en ce que le centre de courbure (16) est situé de l'autre côté du plan de symétrie radial (17) de la courroie que la surface d'appui à courbure convexe (13) pour la coopération avec le côté extérieur du paquet.

Fig.1

Fig.2

Fig. 3

Fig.4

5